# EUROPÄISCHE PATENTANMELDUNG

(11) **EP 3 653 917 A1**
(43) Veröffentlichungstag der Anmeldung: **20.05.2020**
(21) Anmeldenummer: 18207032.6
(22) Anmeldetag: 19.11.2018
(51) Int. Cl.: F16L 41/14, F16L 47/28, F16L 41/00, B60K 15/03

(54) **KUNSTSTOFFTANK MIT EINER ANSCHLUSSVORRICHTUNG**

(71) Anmelder: Magna Steyr Fuel Systems GesmbH, 8261 Sinabelkirchen (AT)
(72) Erfinder: KAHLER, Bernd, 8010 Graz (AT)
(74) Vertreter: Zangger, Bernd

(57) **Zusammenfassung**

Ein Kunststofftank mit einer Anschlussvorrichtung für den Kunststofftank, wobei die Anschlussvorrichtung einen Anschlussnippel (1) umfasst, der von außen in oder an eine Öffnung einer Tankwand (2) des Kunststofftanks eingesetzt oder angesetzt ist und ein Gegenstück (3), das an der Innenseite der Tankwand (2) rund um die Öffnung flächig anliegt, wobei der Anschlussnippel (1) mit dem Gegenstück (3) verschraubt oder verklipst ist, wobei zwischen der Außenseite der Tankwand (2) und einer der Außenseite der Tankwand (2) zugewandten Dichtfläche (4) des Anschlussnippels (1) rund um die Öffnung eine Dichtung (5) angeordnet ist, wobei der Anschlussnippel (1) aus einem emissionsarmen Material besteht und ein Verfahren zur Herstellung eines solchen Kunststofftanks.

## Beschreibung

### Gebiet der Erfindung

Die vorliegende Erfindung betrifft einen Kunststofftank mit einer Anschlussvorrichtung für den Kunststofftank, wobei die Anschlussvorrichtung einen Anschlussnippel umfasst.

### Stand der Technik

Kunststofftanks werden zunehmend in der Automobilindustrie eingesetzt, insbesondere als Kraftstofftanks, und werden in jüngerer Zeit so ausgebildet, dass möglichst geringe Emissionen, insbesondere Kohlewasserstoff-Emissionen (HC-Emissionen), aus dem Kunststofftank austreten können.

Kunststofftanks werden dazu beispielsweise aus High Density Polyethylen (HDPE) gebildet und können, unter anderem zur Erreichung der Emissionsziele, Tankwände aus mehreren Lagen verwenden (Multilayer Tanks), die zum Beispiel eine Barriereschicht gegen Kohlewasserstoff-Emissionen enthalten.

Es ist bekannt, dass zum Beispiel zum Anschluss von Leitungen wie etwa Entlüftungsleitungen Anschlussvorrichtungen wie Nippel oder Stutzen verwendet werden, die als getrennte Bauteile hergestellt und dann mit dem Kunststofftank verbunden, zum Beispiel verschweißt werden.

Allerdings weisen herkömmliche Anschlussvorrichtungen relativ hohe Kohlewasserstoff-Emissionen auf.

### Zusammenfassung der Erfindung

Es ist eine Aufgabe der Erfindung, Kunststofftanks mit solchen Anschlussvorrichtungen in dieser Hinsicht zu verbessern und insbesondere einen Kunststofftank mit einer Anschlussvorrichtung für den Kunststofftank anzugeben, der reduzierte Kohlewasserstoff-Emissionen aufweist. Eine weitere Aufgabe der Erfindung ist es, ein Verfahren anzugeben zur Herstellung eines solchen emissionsreduzierten Kunststofftanks.

Die Lösung der Aufgabe erfolgt durch einen Kunststofftank mit einer Anschlussvorrichtung für den Kunststofftank, wobei die Anschlussvorrichtung einen Anschlussnippel umfasst, der von außen in oder an eine Öffnung einer Tankwand des Kunststofftanks eingesetzt oder angesetzt ist und ein Gegenstück, das an der Innenseite der Tankwand rund um die Öffnung flächig anliegt, wobei der Anschlussnippel mit dem Gegenstück verschraubt oder verklipst ist, wobei zwischen der Außenseite der Tankwand und einer der Außenseite der Tankwand zugewandten Dichtfläche des Anschlussnippels rund um die Öffnung eine Dichtung angeordnet ist, wobei der Anschlussnippel aus einem emissionsarmen Material besteht.

Erfindungsgemäß wird eine Anschlussvorrichtung verwendet, die einen Anschlussnippel aus einem emissionsarmen Material, insbesondere aus Polyoxymethylen (POM), verwendet. Der Anschlussnippel wird von außen mit einem zumindest teilweise innen im Kunststofftank liegenden Gegenstück verschraubt oder verklipst. Zwischen dem Gegenstück und dem Anschlussnippel ist eine Dichtung angeordnet, insbesondere geklemmt, die an der Außenseite der Tankwand an einer Dichtfläche des Anschlussnippels rund um die Öffnung angeordnet ist. Durch diesen Aufbau und insbesondere die Verwendung eines emissionsarmen Anschlussnippels, sowie einer zwischen Anschlussnippel und Gegenstück angeordneten Dichtung, können die Emissionen an der Anschlussstelle gegenüber bekannten Anschlussstellen reduziert werden.

Der Kunststofftank besteht vorzugsweise aus High Density Polyethylen (HDPE), und ist bevorzugt mehrschichtig aufgebaut. Vorzugsweise umfasst die Tankwand des Kunststofftanks eine Barriereschicht gegen Kohlewasserstoff-Emissionen.

Vorzugsweise besteht das Gegenstück aus Polyoxymethylen (POM) oder aus High Density Polyethylen (HDPE) oder ist mit HDPE umspritzt.

Bevorzugt ist der Anschlussnippel zum Anschluss einer Leitung ausgebildet, beispielsweise einer Entlüftungsleitung, oder der Anschlussnippel umfasst einen Temperatursensor, insbesondere PT-Sensor.

Gemäß einer Ausführungsform ist an der Innenseite des Gegenstücks eine Stützhülse angeordnet, zur Stabilisierung des Gegenstücks beim Verschrauben oder Verklipsen mit dem Anschlussnippel.

Vorzugsweise ist das Gegenstück an der Innenseite der Tankwand rund um die Öffnung flächig mit der Tankwand verschweißt. Bevorzugt bestehen dabei sowohl die Tankwand, zumindest an deren verschweißter Oberfläche, als auch das Gegenstück, zumindest an dessen verschweißter Oberfläche, aus HDPE. Die Verschweißung mit dem Gegenstück kann dann bevorzugt im Zuge der Herstellung des Kunststofftanks bzw. im Zuge der Ausformung der Tankwände erfolgen.

Das Gegenstück kann an der Innenseite der Tankwand eingehakt sein. In diesem Fall muss das Gegenstück nicht mit der Tankwand verschweißt sein und kann beispielsweise erst nach Herstellung des Kunststofftanks von außen in eine Öffnung der Tankwand eingeklipst werden.

Ein Verfahren zur Herstellung eines erfindungsgemäßen Kunststofftanks mit einer Anschlussvorrichtung für den Kunststofftank kann vorsehen, dass der Kunststofftank thermogeformt wird, im Zuge des Thermoformens des Kunststofftanks das Gegenstück an der Innenseite der Tankwand mit der Tankwand verschweißt wird und nach dem Thermoformen der Anschlussnippel von außerhalb des Kunststofftanks aufgesetzt und mit dem Gegenstück verschraubt oder verklipst wird.

Bevorzugt wird erst nach dem Thermoformen und vor dem Aufsetzen des Anschlussnippels an der Position des Gegenstücks eine Öffnung in die Tankwand eingebracht, insbesondere die Tankwand an der Position des Gegenstücks ausgekreist.

Bevorzugt wird vor dem Aufsetzen des Anschlussnippels an der Position des Gegenstücks eine Dichtung auf die Tankwand aufgelegt.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht eines Ausschnitts eines erfindungsgemäßen Kunststofftanks, der die Anschlussvorrichtung des Kunststofftanks zeigt.
- Fig. 2: ist eine schematische Schnittansicht eines Ausschnitts einer alternativen Ausführungsform eines erfindungsgemäßen Kunststofftanks, der die Anschlussvorrichtung des Kunststofftanks zeigt.

### Detaillierte Beschreibung der Erfindung

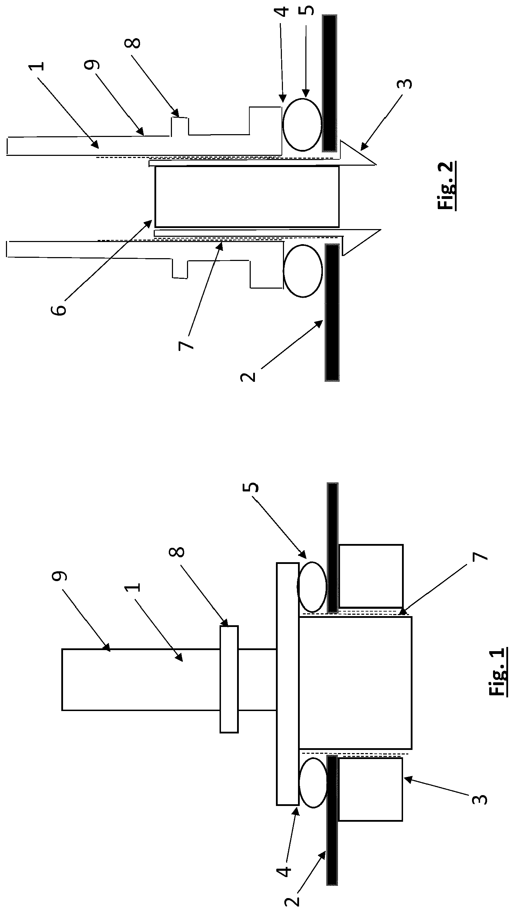

In Fig. 1 ist ein erfindungsgemäßer Kunststofftank, der zumindest an seiner Innenseite, bevorzugt zumindest in beiden außen liegenden Schichten (Multilayeraufbau) oder komplett aus High Density Polyethylen (HDPE) besteht, mit einer Anschlussvorrichtung für den Kunststofftank dargestellt. Die Anschlussvorrichtung umfasst einen Anschlussnippel 1, aus Polyoxymethylen (POM), einem emissionsarmen Material. Der Anschlussnippel 1 ist von außen in eine Öffnung einer Tankwand 2 des Kunststofftanks eingesetzt. Ein Gegenstück 3, das zumindest außen aus High Density Polyethylen (HDPE) besteht, liegt an der Innenseite der Tankwand 2 rund um die Öffnung flächig an und ist mit der Innenseite der Tankwand 2 verschweißt. Der Anschlussnippel 1 ist mit dem Gegenstück 3 über Schraubgewinde 7 verschraubt. Hierzu weist der Anschlussnippel 1 ein Außengewinde auf (strichliert gezeichnet) und das Gegenstück 3 ein Innengewinde (strichliert gezeichnet). Zwischen der Außenseite der Tankwand 2 und einer der Außenseite der Tankwand 2 zugewandten Dichtfläche 4 des Anschlussnippels 1, die parallel zur Tankwand 2 ausgerichtet ist, ist rund um die Öffnung eine Dichtung 5 angeordnet, insbesondere geklemmt zwischen Tankwand 2 und Dichtfläche 4. Die Dichtung 5 besteht bevorzugt aus Flurkarbon-Kautschuk (FKM) und dichtet den Innenraum des Kunststofftanks zur Außenwelt hin ab.

Der Anschlussnippel 1 ist zum Anschluss einer Leitung, beispielsweise Entlüftungsleitung, ausgebildet und weist daher eine kreisförmig umlaufende Rippe 8 an einem Anschlussstutzen 9 auf, um ein Abrutschen einer aufgesteckten Leitung zu verhindern. Der Anschlussnippel 1 kann zum Beispiel alternativ zum Tragen eines PT-Sensors oder eines anderen Sensors ausgebildet sein.

In der Ausführung der Fig. 1 ist das Gegenstück 3 an der Innenseite der Tankwand 2 rund um die Öffnung flächig mit der Tankwand 2, aus dem selben Material wie das Gegenstück 3, verschweißt.

In der Ausführung der Fig. 2 ist hingegen das Gegenstück 3 an der Innenseite der Tankwand 2 eingehakt. Das Gegenstück 3 ist hier nicht mit der Tankwand 2 verschweißt. Das Gegenstück 3 wird erst nach der Fertigung des Kunststofftanks und der Auskreisung der Öffnung in der Tankwand 2 in die Öffnung von außen eingesetzt und in der Öffnung eingehakt bzw. in diese eingeklipst.

Das Gegenstück 3 kann hier beispielsweise aus dem selben Material bestehen wie der Anschlussnippel 1, insbesondere aus Polyoxymethylen (POM).

Der Anschlussnippel 1 ist wieder mit dem Gegenstück 3 über Schraubgewinde 7 verschraubt. In der dargestellten Ausführung weist der Anschlussnippel 1 ein Innengewinde auf (strichliert gezeichnet) und das Gegenstück 3 ein Außengewinde (strichliert gezeichnet).

An der Innenseite des Gegenstücks 3 ist eine Stützhülse 6 angeordnet, zum stabilisieren des Gegenstücks 3 beim Verschrauben oder Verklipsen des Anschlussnippels 1 mit dem Gegenstück 3. Eine solche Stützhülse 6 kann auch in einer Ausführung gemäß Fig. 1 verwendet werden.

In einem Verfahren zur Herstellung eines Kunststofftanks mit einer Anschlussvorrichtung für den Kunststofftank gemäß Fig. 1 kann der Kunststofftank thermogeformt werden und im Zuge des Thermoformens des Kunststofftanks bereits das Gegenstück 3 an der Innenseite der Tankwand 2 mit der Tankwand 2 verschweißt werden. Auf das Verschweißen des Gegenstücks kann für eine Ausführung gemäß Fig. 2 verzichtet werden.

Nach dem Thermoformen wird an der Position des Gegenstücks 3 oder der gewünschten Position des Gegenstücks 3 eine Öffnung in die Tankwand 2 eingebracht, also insbesondere ausgekreist oder gebohrt.

An dieser Position, rund um die Öffnung, wird eine Dichtung 5 auf die Tankwand 2 aufgelegt.

Nach dem Thermoformen des Kunststofftanks und gegebenenfalls Einsetzen des Gegenstücks 3 in die Öffnung (für eine Ausführung gemäß Fig. 2) wird der Anschlussnippel 1 von außerhalb des Kunststofftanks aufgesetzt und mit dem Gegenstück 3 verschraubt oder verklipst.

### Bezugszeichenliste

- 1: Anschlussnippel
- 2: Tankwand
- 3: Gegenstück
- 4: Dichtfläche
- 5: Dichtung
- 6: Stützhülse
- 7: Schraubgewinde
- 8: Rippe
- 9: Anschlussstutzen

## Patentansprüche

1. Kunststofftank mit einer Anschlussvorrichtung für den Kunststofftank, wobei die Anschlussvorrichtung einen Anschlussnippel (1) umfasst, der von außen in oder an eine Öffnung einer Tankwand (2) des Kunststofftanks eingesetzt oder angesetzt ist und ein Gegenstück (3), das an der Innenseite der Tankwand (2) rund um die Öffnung flächig anliegt, wobei der Anschlussnippel (1) mit dem Gegenstück (3) verschraubt oder verklipst ist, wobei zwischen der Außenseite der Tankwand (2) und einer der Außenseite der Tankwand (2) zugewandten Dichtfläche (4) des Anschlussnippels (1) rund um die Öffnung eine Dichtung (5) angeordnet ist, wobei der Anschlussnippel (1) aus einem emissionsarmen Material besteht.

2. Kunststofftank nach Anspruch 1,
**dadurch gekennzeichnet, dass** der Anschlussnippel (1) aus Polyoxymethylen (POM) besteht.

3. Kunststofftank nach zumindest einem der vorhergehenden Ansprüche,
**dadurch gekennzeichnet, dass** das Gegenstück (3) aus Polyoxymethylen besteht, aus High Density Polyethylen (HDPE) besteht oder mit High Density Polyethylen (HDPE) umspritzt ist.

4. Kunststofftank nach zumindest einem der vorhergehenden Ansprüche,
**dadurch gekennzeichnet, dass** der Anschlussnippel (1) zum Anschluss einer Leitung ausgebildet ist oder einen Temperatursensor, insbesondere PT-Sensor, umfasst.

5. Kunststofftank nach zumindest einem der vorhergehenden Ansprüche,
**dadurch gekennzeichnet, dass** an der Innenseite des Gegenstücks (3) eine Stützhülse (6) angeordnet ist.

6. Kunststofftank nach zumindest einem der vorhergehenden Ansprüche,
**dadurch gekennzeichnet, dass** das Gegenstück (3) an der Innenseite der Tankwand (2) rund um die Öffnung flächig mit der Tankwand (2) verschweißt ist.

7. Kunststofftank nach zumindest einem der vorhergehenden Ansprüche,
**dadurch gekennzeichnet, dass** das Gegenstück (3) an der Innenseite der Tankwand (2) eingehakt ist.

8. Verfahren zur Herstellung eines Kunststofftanks mit einer Anschlussvorrichtung für den Kunststofftank nach zumindest einem der vorhergehenden Ansprüche,
**dadurch gekennzeichnet, dass** der Kunststofftank thermogeformt wird, im Zuge des Thermoformens des Kunststofftanks das Gegenstück (3) an der Innenseite der Tankwand (2) mit der Tankwand (2) verschweißt wird und nach dem Thermoformen der Anschlussnippel (1) von außerhalb des Kunststofftanks aufgesetzt und mit dem Gegenstück (3) verschraubt oder verklipst wird.

9. Verfahren nach Anspruch 8,
**dadurch gekennzeichnet, dass** nach dem Thermoformen und vor dem Aufsetzen des Anschlussnippels (1) an der Position des Gegenstücks (3) eine Öffnung in die Tankwand (2) eingebracht wird.

10. Verfahren nach Anspruch 8 oder 9,
**dadurch gekennzeichnet, dass** vor dem Aufsetzen des Anschlussnippels (1) an der Position des Gegenstücks (3) eine Dichtung (5) auf die Tankwand (2) aufgelegt wird.
